# FASCICULE DE BREVET EUROPEEN

(11) **EP 1 134 461 B1**
(45) Date de publication et mention de la délivrance du brevet: **17.08.2005**
(21) Numéro de dépôt: 01400642.3
(22) Date de dépôt: 12.03.2001
(51) Int. Cl.: F16H 63/20, F16H 63/30

(54) **Dispositif de commande de boîte de vitesses à tubes coaxiaux**
Schaltvorrichtung für ein Wechselgetriebe mit koaxialen Rohren
Shifting device for a transmission with coaxial tubes

(30) Priorité: 14.03.2000 FR 0003241
(43) Date de publication de la demande: 19.09.2001
(73) Titulaire: Peugeot Citroen Automobiles SA, 92200 Neuilly sur Seine (FR)
(72) Inventeur: Lesne, Bertrand, 75015 Paris (FR)
(74) Mandataire: Bentz, Jean-Paul

(56) Documents cités:
- DE-C- 941 713
- FR-A- 1 474 977
- GB-A- 1 031 400

## Description

La présente invention concerne, de façon générale, le domaine des systèmes de transmission de puissance pour véhicules automobiles, en particulier les dispositifs de commande de boîtes de vitesses.

Plus précisément, la présente invention concerne un dispositif de commande d'une boîte de vitesses, comprenant une pluralité d'axes de fourchettes s'étendant suivant une première direction commune, une pluralité d'organes menés dont chacun est porté par un axe de fourchette correspondant et présente une encoche associée, et un organe menant mobile suivant deux mouvements d'amplitude limitée dont le premier s'effectue dans un premier plan perpendiculaire à la première direction, et dont le second s'effectue dans un plan perpendiculaire au premier et parallèle à la première direction, le premier mouvement permettant de placer l'organe menant dans l'encoche d'un organe mené sélectionné, et le second mouvement permettant à l'organe menant de déplacer, parallèlement à la première direction, l'organe mené sélectionné, dans un premier sens ou dans un second sens inverse du premier, par l'intermédiaire de l'encoche associée, les organes menés prenant la forme de fenêtres, chaque fenêtre présentant, outre l'encoche qui lui est associée, une plage libre dans laquelle l'organe menant peut se mouvoir sans entraîner cette fenêtre. Un tel dispositif est connu du GB 1 031 400 A. .

L'invention se situe dans ce contexte et a pour but de proposer une boîte de vitesses qui présente, à la fois, une structure simple et de réalisation aisée, et un fonctionnement fiable et précis.

A cette fin, le dispositif de commande de l'invention, par ailleurs conforme à la définition générique qu'en donne le préambule ci-dessus, est essentiellement caractérisé en ce que les fenêtres respectives sont superposées et en ce que l'encoche de chaque fenêtre est superposée à une plage libre de chacune des autres fenêtres.

Dans la forme de mise en oeuvre préférée de l'invention, le premier mouvement est un mouvement de rotation et le second mouvement est un mouvement de translation.

Pour permettre un guidage simple et naturel des éléments les uns par rapport aux autres, les fenêtres sont avantageusement découpées dans des tubes coaxiaux respectifs qui coulissent les uns dans les autres et qui constituent au moins partiellement les axes de fourchettes.

L'organe menant peut ainsi, par exemple, être porté par un arbre de commande coaxial aux tubes et qui coulisse par rapport à eux.

Dans ce cas, les tubes peuvent également être tous disposés autour de l'arbre de commande, l'organe menant prenant par exemple la forme d'un pion radial solidaire de l'arbre de commande.

Il est en outre possible de prévoir que l'arbre de commande soit plein et que l'organe menant soit une goupille qui traverse l'arbre de commande.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en plan d'un dispositif de commande de boîte de vitesses conforme à l'invention;
- la figure 2 est une vue en perspective du dispositif de la figure 1, observé suivant l'incidence indiquée par la référence II de la figure 1;
- la figure 3 est une vue en perspective du dispositif de la figure 1, observé suivant l'incidence indiquée par la référence III de la figure 1;
- la figure 4 est une vue en perspective du dispositif de la figure 1, après démontage, et observé suivant l'incidence indiquée par la référence II de la figure 1;
- la figure 5 est une vue en perspective du dispositif de la figure 1, après démontage, et observé suivant l'incidence indiquée par la référence III de la figure 1;
- la figure 6 est une vue en coupe du dispositif de la figure 1, effectuée suivant le plan de trace P1, et pour une configuration du dispositif dans laquelle l'organe menant est disposé dans l'encoche 211;
- la figure 7 est une vue en coupe du dispositif de la figure 1, effectuée suivant le plan de trace P1, et pour une configuration du dispositif dans laquelle l'organe menant est disposé dans l'encoche 221; et
- la figure 8 est une vue en coupe du dispositif de la figure 1, effectuée suivant le plan de trace P1, et pour une configuration du dispositif dans laquelle l'organe menant est disposé dans l'encoche 231.

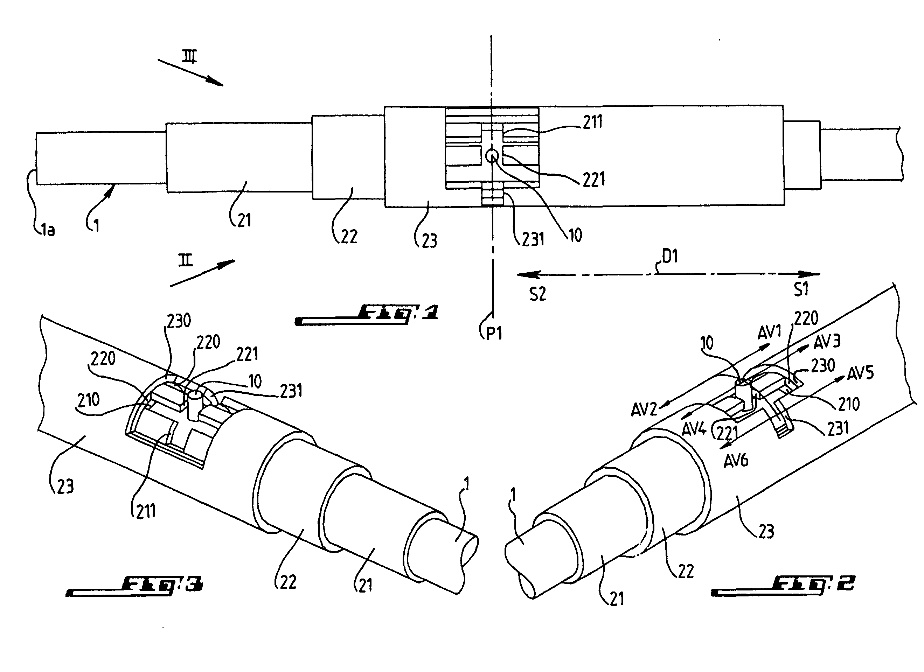

Comme le montrent le mieux les figures 1 et 2, le dispositif de commande de l'invention comprend, de façon connue, un organe menant 10, par exemple porté par un arbre de commande 1, une pluralité d'axes de fourchettes tels que 21 à 23, et une pluralité d'organes menés tels que 210 à 230, dont chacun est porté par un axe de fourchette correspondant et présente une encoche associée, telle que 211 à 231.

Dans l'art antérieur bien connu de l'homme de l'art, l'organe menant est constitué par un doigt de passage, et les organes menés sont constitués chacun par une crosse munie d'une encoche.

Les axes de fourchettes 21 à 23 s'étendent parallèlement les uns aux autres suivant une direction commune D1, et l'organe menant 10 est mobile suivant deux mouvements d'amplitude limitée.

Le premier mouvement de l'organe menant 10 s'effectue dans un premier plan P1 dont la trace est visible sur la figure 1 et qui est perpendiculaire à la fois à la première direction D1 et au plan de la figure 1.

Le second mouvement de l'organe menant 10 s'effectue dans un plan tel que P21 (figure 6), P22 (figure 7), ou P23 (figure 8), qui est perpendiculaire au premier plan P1 et qui est parallèle à la direction commune Dl.

Le premier mouvement de l'organe menant 10, c'est-à-dire celui qui s'effectue dans le premier plan P1, permet de placer l'organe menant 10 dans l'une des encoches 211 à 231, cette encoche étant celle de l'organe mené 210 à 230 qu'il convient de sélectionner, c'est-à-dire de l'axe de fourchette 21 à 23 qu'il convient de déplacer.

Le second mouvement de l'organe menant 10, c'est-à-dire celui qui s'effectue dans le plan tel que P21, P22, ou P23, permet à l'organe menant 10 de déplacer, parallèlement à la première direction D1, l'organe mené sélectionné 210 à 230, dans un premier sens S1 ou dans un second sens S2 inverse du premier (figure 1), en prenant appui sur les bords de l'encoche 211 à 231 qui est associée à l'organe mené sélectionné.

Selon un premier aspect spécifique de l'invention, les organes menés 210 à 230 prennent la forme de fenêtres respectives superposées, et chaque fenêtre, telle que 210 à 230, présente, outre l'encoche 211 à 231 qui lui est associée, une plage libre, telle que 212 à 232, dans laquelle l'organe menant 10 peut se mouvoir sans entraîner cette fenêtre 210 à 230.

Et selon un second aspect spécifique de l'invention, l'encoche de chaque fenêtre est superposée à une plage libre de chacune des autres fenêtres.

En d'autres termes, l'encoche 211de la fenêtre 210 est superposée à la plage libre 222 de la fenêtre 220 et à la plage libre 232 de la fenêtre 230.

L'encoche 221de la fenêtre 220 est superposée à la plage libre 212 de la fenêtre 210 et à la plage libre 232 de la fenêtre 230.

De même, l'encoche 231de la fenêtre 230 est superposée à la plage libre 212 de la fenêtre 210 et à la plage libre 222 de la fenêtre 220.

Comme le montrent le mieux les figures 6 à 8, les fenêtres 210 à 230 sont de préférence découpées dans des tubes coaxiaux respectifs, qui coulissent les uns dans les autres et qui constituent au moins partiellement les axes de fourchettes 21 à 23.

Dans ces conditions, le premier mouvement de l'organe menant 10, c'est-à-dire celui qui s'effectue dans le premier plan P1, est un mouvement de rotation, tandis que le second mouvement de l'organe menant 10, c'est-à-dire celui qui s'effectue dans un plan tel que P21 (figure 6), P22 (figure 7), ou P23 (figure 8), est un mouvement de translation.

Comme le montre la figure 2, qui évoque de façon symbolique les mouvements de l'organe menant 10, le dispositif de l'invention permet ainsi de sélectionner, suivant une grille classique, six rapports de vitesses, tels que AV1 à AV6, de la boîte de vitesses commandée.

Selon le mode de réalisation illustré, l'arbre de commande 1 qui porte l'organe menant 10 est de préférence un arbre plein, coaxial aux tubes 21 à 23 et monté coulissant par rapport à eux dans le tube intérieur 21, l'organe menant 10 prenant quant à lui la forme d'un pion radial solidaire de l'arbre de commande 1, et avantageusement constitué par une goupille qui traverse l'arbre de commande 1.

## Revendications

1. Dispositif de commande d'une boîte de vitesses, comprenant une pluralité d'axes de fourchettes (21 à 23) s'étendant suivant une première direction commune (D1), une pluralité d'organes menés (210 à 230) dont chacun est porté par un axe de fourchette correspondant (21 à 23) et présente une encoche associée (211 à 231), et un organe menant (10) mobile suivant deux mouvements d'amplitude limitée dont le premier s'effectue dans un premier plan (P1) perpendiculaire à la première direction (D1), et dont le second s'effectue dans un plan (P21, P22, P23) perpendiculaire au premier (P1) et parallèle à la première direction (D1), le premier mouvement permettant de placer l'organe menant (10) dans l'encoche (211 à 231) d'un organe mené sélectionné (210 à 230), et le second mouvement permettant à l'organe menant (10) de déplacer, parallèlement à la première direction (D1), l'organe mené sélectionné (210 à 230), dans un premier sens (S1) ou dans un second sens (S2) inverse du premier, par l'intermédiaire de l'encoche associée (211 à 231), les organes menés (210 à 230) prenant la forme de fenêtres, chaque fenêtre (210 à 230) présentant, outre l'encoche (211 à 231) qui lui est associée, une plage libre (212 à 232) dans laquelle l'organe menant (10) peut se mouvoir sans entraîner cette fenêtre (210 à 230), **caractérisé en ce que** les fenêtres respectives sont superposées et **en ce que** l'encoche (211 à 231) de chaque fenêtre est superposée à une plage libre (222, 232; 212, 232; 212, 222) de chacune des autres fenêtres (220, 230; 210, 230; 210, 220).

2. Dispositif de commande suivant la revendication 1, **caractérisé en ce que** le premier mouvement est un mouvement de rotation et **en ce que** le second mouvement est un mouvement de translation.

3. Dispositif de commande suivant la revendication 1 ou 2, **caractérisé en ce que** les fenêtres (210 à 230) sont découpées dans des tubes coaxiaux respectifs qui coulissent les uns dans les autres et qui constituent au moins partiellement les axes de fourchettes (21 à 23).

4. Dispositif de commande suivant la revendication 3, **caractérisé en ce que** l'organe menant (10) est porté par un arbre de commande (1) coaxial aux tubes (21 à 23) et qui coulisse par rapport à eux.

5. Dispositif de commande suivant la revendication 4, **caractérisé en ce que** les tubes (21 à 23) sont tous disposés autour de l'arbre de commande (1) et **en ce que** l'organe menant (10) est un pion radial solidaire de l'arbre de commande (1).

6. Dispositif de commande suivant la revendication 5, **caractérisé en ce que** l'arbre de commande (1) est plein et **en ce que** l'organe menant (10) est une goupille qui traverse l'arbre de commande.

## Patentansprüche

1. Vorrichtung zum Schalten eines Wechselgetriebes, mit einer Mehrzahl von Schaltgabelstangen (21 bis 23), die in einer ersten gemeinsamen Verlaufsrichtung (D1) verlaufen, und mit einer Mehrzahl von Abtriebsorganen (210 bis 230), von denen jedes von einer entsprechenden Schaltgabelstange (21 bis 23) abgestützt wird und eine zugeordnete Aussparung (211 bis 231) aufweist, und mit einem Antriebsorgan (10), das gemäß zweier Bewegungen mit begrenzter Höhe beweglich ist, von denen die erste in einer ersten Ebene (P1) senkrecht zur ersten Verlaufsrichtung (D1) und die zweite in einer Ebene (P21, P22, P23) senkrecht zur ersten Ebene (P1) und parallel zur ersten Verlaufsrichtung (D1) erfolgt, wobei die erste Bewegung ermöglicht, das Antriebsorgan (10) in die Aussparung (211 bis 231) eines ausgewählten Abtriebsorgans (210 bis 230) zu positionieren und die zweite Bewegung es dem Antriebsorgan (10) ermöglicht, das ausgewählte Abtriebsorgan (210 bis 230) mittels der zugeordneten Aussparung (211 bis 231) parallel zur ersten Verlaufsrichtung (D1) in einer ersten Verstellrichtung (S1) oder in einer zur ersten Verstellrichtung entgegengesetzten zweiten Verstellrichtung (S2) zu verstellen, wobei die Abtriebsorgane (210 bis 230) eine Fensterform annehmen, wobei jedes Fenster (210 bis 230) neben der diesem zugeordneten Aussparung (211 bis 231) einen Freiraum (212 bis 232) aufweist, in dem das Antriebsorgan (10) sich bewegen kann, ohne dabei dieses Fenster (210 bis 230) mitzunehmen, **dadurch gekennzeichnet, dass** die jeweiligen Fenster übereinander liegen und dass die Aussparung (211 bis 231) eines jeden Fensters über einem Freiraum (222, 232; 212, 232; 212, 222) eines jeden weiteren Fensters (220, 230; 210, 230; 210, 220) liegt.

2. Schaltvorrichtung nach Anspruch 1, **dadurch gekennzeichnet, dass** die erste Bewegung eine Drehbewegung ist und dass die zweite Bewegung eine translatorische Bewegung ist.

3. Schaltvorrichtung nach Anspruch 1 oder 2, **dadurch gekennzeichnet, dass** die Fenster (210 bis 230) in jeweilige koaxiale Rohre geschnitten sind, die ineinander gleiten und zumindest teilweise die Schaltgabelstangen (21 bis 23) bilden.

4. Schaltvorrichtung nach Anspruch 3, **dadurch gekennzeichnet, dass** das Antriebsorgan (10) von einer koaxial zu den Rohren (21 bis 23) verlaufenden Schaltwelle (1) abgestützt wird, die zu diesen gleitbeweglich ist.

5. Schaltvorrichtung nach Anspruch 4, **dadurch gekennzeichnet, dass** die Rohre (21 bis 23) alle um die Schaltwelle (1) herum angeordnet sind und dass das Antriebsorgan (10) ein fest mit der Schaltwelle (1) verbundener radialer Zapfen ist.

6. Schaltvorrichtung nach Anspruch 5, **dadurch gekennzeichnet, dass** die Schaltwelle (1) massiv ausgeführt ist und dass das Antriebsorgan (10) ein Stift ist, der die Schaltwelle durchsetzt.

## Claims

1. Shifting device for a transmission comprising several shift rails (21 to 23), extending according to a first common direction (D1), several driven devices (210 to 230), each of which is carried by a corresponding shift rail (21 to 23) and has an associated notch (211 to 231), and a driving device (10), which is may be moved according to two movements of limited amplitude, the first of which is carried out in a first plane (P1), which is perpendicular to the first direction (D1) and the second of which is carried out in a plane (P21, P22, P23), which is perpendicular to the first (P1) and parallel to the first direction (D1), the first movement allowing the driving organ (10) to be placed in the notch (211 to 231) of a selected driven device (210 to 230) and the second movement allowing the driving device (10) to move the selected driven device (210 to 230) parallel to the first direction (D1) in a first direction (S1) or a second direction (S2), which is inverse to the first, by means of the associated notch (211 to 231), **characterised in that** the driven devices (210 to 230) taking the form of windows, each window (210 to 230) also having in addition to a notch (211 to 231) associated with it, a free area (212 to 232) in which the driving device (10) may move without involving this window (210 to 230), the respective windows are superimposed and **in that** the notch (211 to 231) of each window is superimposed on a free area (222, 232; 212, 232; 212, 222) of each of the other windows (220, 230; 210, 230; 210, 220).

2. Shifting device according to claim 1, **characterised in that** the first movement is a rotary movement and the second movement is a translatory movement.

3. Shifting device according to claim 1 or 2, **characterised in that** the windows (210 to 230) are cut out in the respective coaxial tubes which slide in each other and at least partly form the shift rails (21 to 23).

4. Shifting device according to claim 3, **characterised in that** the driving device (10) is carried by a drive shaft (1), which is coaxial to the tubes (21 to 23) and which slides in relation to them.

5. Shifting device according to claim 4, **characterised in that** the tubes (21 to 23) are all arranged around the drive shaft (1) and the driving device (10) is a radial pin which is integral with the drive shaft (1).

6. Shifting device according to claim 5, **characterised in that** the drive shaft (1) is solid and the driving device (10) is a pin, which crosses the drive shaft.
